# EUROPEAN PATENT APPLICATION

(11) **EP 4 838 264 A1**
(43) Date of publication of application: **11.11.2026**
(21) Application number: 24915148.1
(22) Date of filing: 24.12.2024
(51) Int. Cl.: G01S 19/28, G06V 10/26

(54) **POSITIONING METHOD AND APPARATUS, ELECTRONIC DEVICE, AND STORAGE MEDIUM**

(30) Priority: 03.01.2024 CN 202410010640
(71) Applicant: Shanghai Huace Navigation Technology Ltd., Shanghai 201702 (CN); Wuhan Huace Satellite Technology Co., Ltd., Wuhan, Hubei 430223 (CN)
(72) Inventor: DUAN, Rui, Shanghai 201702 (CN); WU, Xiaomeng, Shanghai 201702 (CN); ZHANG, Peiyao, Shanghai 201702 (CN); YAN, Lingyun, Shanghai 201702 (CN); REN, Gaoyue, Shanghai 201702 (CN)
(74) Representative: De Arpe Tejero, Manuel
(86) International application number: PCT/CN2024/141957
(87) International publication number: WO 2025/145933

(57) **Abstract**

This application provides a positioning method, an apparatus, an electronic device, and storage medium, relating to the technical field of positioning. The method identifies an occlusion category of an occluder at a position of a satellite in a target image, and determines a target satellite for positioning according to the occlusion category, so that satellites can be classified at a finer granularity based on the occlusion category, facilitating selection of more satellites favorable for positioning, thereby improving the positioning effect of devices.

## Description

### CROSS-REFERENCE TO RELATED APPLICATIONS

This application claims priority of Chinese patent application No. 2024100106404, titled "POSITIONING METHOD, APPARATUS, ELECTRONIC DEVICE, AND STORAGE MEDIUM" filed with the China National Intellectual Property Administration on January 3, 2024, the entire content of which is incorporated herein by reference.

### TECHNICAL FIELD

This application relates to the technical field of positioning, and in particular, to a positioning method, an apparatus, an electronic device, and storage medium.

### BACKGROUND

Nowadays, high-precision location services have become an essential part of our daily production and life. Mobile navigation, autonomous driving, intelligent transportation, robot navigation, unmanned vehicles, smart agriculture, and many other aspects all rely on high-precision location services. GNSS (Global Navigation Satellite System), as a widely adopted absolute positioning means, plays a crucial role in high-precision location services. In recent years, the development of multi-frequency and multi-system GNSS has provided positioning devices with a sufficient number of visible satellites and available signals, greatly improving the availability, integrity, and accuracy of GNSS systems. Meanwhile, the maturity of high-precision GNSS positioning technologies such as RTK (Real-Time Kinematic) and PPP (Precise Point Positioning) has made it possible for low-cost devices to achieve high-precision positioning.

However, GNSS also has vulnerabilities, as its positioning performance heavily depends on signal quality, which is significantly affected by the environment and receiver hardware. In areas where GNSS signals are obstructed, such as mountainous regions and urban areas, especially in dense urban regions with tall buildings, environmental occlusion and reflection can cause a substantial degradation of GNSS performance. In such environments, if conventional positioning technologies are still used, the positioning effect will be significantly compromised.

### SUMMARY

The purpose of the embodiments of this application is to provide a positioning method, a device, an electronic device, and storage medium, so as to improve the problem of poor positioning effects caused by existing positioning approaches.

In a first aspect, the embodiments of this application provide a positioning method, the method comprising:
acquiring a target image collected from a zenith direction of a device to be positioned;
acquiring image positions of a plurality of satellites mapped to the target image wherein the plurality of satellites are satellites corresponding to a plurality of satellite signals received by the device to be positioned;
identifying an occlusion category of an occluder at the image positions in the target image;
determining a target satellite for positioning from the plurality of satellites according to the occlusion category; and
positioning the device to be positioned using the target satellite.

In the above implementation process, by identifying the occlusion category of the occluder at the position of the satellite in the target image and determining the target satellite for positioning according to the occlusion category, the satellites can be classified at a finer granularity based on the occlusion category, facilitating selection of more satellites favorable for positioning, thereby improving the positioning effect of the device.

Optionally, the determining a target satellite for positioning from the plurality of satellites according to the occlusion category comprises:
determining an occlusion level of a satellite at a corresponding image position according to the occlusion category wherein different occlusion categories correspond to different occlusion levels; and
determining the target satellite for positioning from the plurality of satellites according to the occlusion level.

In the above implementation process, by setting different occlusion levels for different occlusion categories, the different occlusion capabilities of different occluders on satellite signals can be intuitively reflected, which is beneficial for quickly determining satellites available for positioning based on the occlusion levels.

Optionally, the determining a target satellite for positioning from the plurality of satellites according to the occlusion level comprises:
counting the number of satellites corresponding to each occlusion level; and
determining the target satellite for positioning from the plurality of satellites based on the number of satellites.

In the above implementation process, by determining the target satellite based on the number of satellites corresponding to each occlusion level, the situation where positioning cannot be performed due to an insufficient number of satellites can be avoided.

Optionally, the determining a target satellite for positioning from the plurality of satellites based on the number of satellites comprises:
determining the target satellite for positioning from the plurality of satellites based on the number of satellites and a DOP value of satellites corresponding to the occlusion level.

In the above implementation process, by determining the satellites for positioning based on the number of satellites and the DOP value, the situation where positioning cannot be performed due to an insufficient number of satellites can be avoided, and the positioning accuracy when using the target satellites for positioning can be ensured based on the DOP value.

Optionally, the determining a target satellite for positioning from the plurality of satellites based on the number of satellites and a DOP value of satellites corresponding to the occlusion level comprises:
sequentially selecting satellites in an order of occlusion levels from a level 0 to a level N until the number of selected satellites reaches a set threshold wherein the level 0 to the level N are divided from a no-occlusion level to a full-occlusion level with the level 0 being the no-occlusion level and the level N being the full-occlusion level;
calculating a DOP value of the selected satellites; and
determining the selected satellites as the target satellite for positioning if the DOP value is less than a set threshold.

In the above implementation process, the selected target satellites reaching the set threshold ensures the minimum number of satellites for positioning, and the DOP value of the target satellites being less than the set threshold ensures the positioning accuracy.

Optionally, the determining a target satellite for positioning from the plurality of satellites based on the number of satellites and a DOP value of satellites corresponding to the occlusion level comprises:
sequentially selecting satellites of each occlusion level in an order of occlusion levels from a level 0 to a level N until the number of satellites corresponding to i selected occlusion levels is greater than or equal to a set threshold wherein the level 0 to the level N are divided from a no-occlusion level to a full-occlusion level with the level 0 being the no-occlusion level and the level N being the full-occlusion level and i is an integer greater than or equal to 1 and less than or equal to N;
calculating a DOP value of satellites corresponding to the i selected occlusion levels; and
determining satellites corresponding to the i selected occlusion levels as the target satellite for positioning if the DOP value is less than a set threshold.

In the above implementation process, selecting satellites of i occlusion levels with small occlusion levels ensures that the selected satellites have good signal quality and a small DOP value for positioning, thereby greatly improving the positioning accuracy.

Optionally, the determining a target satellite for positioning from the plurality of satellites based on the number of satellites comprises:
sequentially selecting satellites in an order of occlusion levels from a level 0 to a level N until the number of selected satellites reaches a set threshold wherein the level 0 to the level N are divided from a no-occlusion level to a full-occlusion level with the level 0 being the no-occlusion level and the level N being the full-occlusion level; and
determining the selected satellites as the target satellite for positioning.

In the above implementation process, selecting a set number of satellites with small occlusion levels ensures that the selected satellites have a low probability of being occluded and strong satellite signals, which helps improve the positioning effect, and the number of selected satellites reaching the set threshold ensures that the selected satellites are sufficient for positioning.

Optionally, the determining a target satellite for positioning from the plurality of satellites according to the occlusion level comprises:
sequentially selecting satellites of i occlusion levels in an order of occlusion levels from a level 0 to a level N wherein the level 0 to the level N are divided from a no-occlusion level to a full-occlusion level with the level 0 being the no-occlusion level and the level N being the full-occlusion level and i is an integer greater than or equal to 1 and less than or equal to N; and
determining the satellites of the i occlusion levels as the target satellite for positioning.

In the above implementation process, selecting some satellites with small occlusion levels ensures that the selected satellites have a low probability of being occluded and strong satellite signals, which helps improve the positioning effect.

Optionally, the acquiring image positions of a plurality of satellites mapped to the target image comprises:
acquiring coordinate positions of the plurality of satellites in an Earth-Centered, Earth-Fixed (ECEF) coordinate system;
converting the coordinate positions of the plurality of satellites in the ECEF coordinate system to coordinate positions in a local horizontal coordinate system according to an estimated current position of the device to be positioned; and
mapping the coordinate positions of the plurality of satellites in the local horizontal coordinate system to the target image using attitude information of an image capturing device of the device to be positioned and intrinsic and extrinsic parameters of the image capturing device to obtain the image positions corresponding to the plurality of satellites in the target image.

In the above implementation process, by correcting the attitude information of the image capturing device in the image to be positioned and then converting the satellite coordinates, the target image captured in this solution can be adapted to positioning in tilted scenarios, enabling recognition of occluded satellites even in tilted attitudes.

Optionally, the target image is a two-dimensional image or the target image is a three-dimensional laser point cloud, so that the positioning method can be applied to both two-dimensional image acquisition scenarios and three-dimensional image acquisition scenarios.

Optionally, the acquiring a target image collected from a zenith direction of a device to be positioned comprises:
acquiring a plurality of images collected from the zenith direction of the device to be positioned by a plurality of cameras; and
performing panoramic image stitching on the plurality of images to obtain the target image.

In the above implementation process, by performing panoramic stitching on the acquired plurality of images, an image with a wider field of view can be obtained, which helps subsequently map the coordinates of all satellites to the image to reduce the situation where satellite coordinates fall outside the image.

In a second aspect, the embodiments of this application provide a positioning device, the device comprising:
an image acquisition module configured to acquire a target image collected from a zenith direction of a device to be positioned;
a position acquisition module configured to acquire image positions of a plurality of satellites mapped to the target image wherein the plurality of satellites are satellites corresponding to a plurality of satellite signals received by the device to be positioned;
a category recognition module configured to identify an occlusion category of an occluder at the image positions in the target image;
a satellite filtering module configured to determine a target satellite for positioning from the plurality of satellites according to the occlusion category; and
a positioning module configured to position the device to be positioned using the target satellite.

In a third aspect, the embodiments of this application provide an electronic device comprising a processor and a memory, the memory storing computer-readable instructions, and when the computer-readable instructions are executed by the processor, the steps in the method provided in the above first aspect are performed.

In a fourth aspect, the embodiments of this application provide a computer-readable storage medium storing a computer program, and when the computer program is executed by a processor, the steps in the method provided in the above first aspect are performed.

Other features and advantages of this application will be described in the subsequent description, and some of them will become apparent from the description or be understood through the implementation of the embodiments of this application, and the purpose and other advantages of this application can be achieved and obtained through the structures particularly pointed out in the written description, claims, and drawings.

### BRIEF DESCRIPTION OF THE DRAWINGS

In order to more clearly illustrate the technical solutions of the embodiments of this application, the drawings used in the embodiments of this application will be briefly introduced below. It should be understood that the following drawings only show some embodiments of this application, and therefore should not be regarded as limiting the scope. For those of ordinary skill in the art, other related drawings can also be obtained from these drawings without creative labor.
FIG. 1 is a flowchart of a positioning method provided by an embodiment of this application.
FIG. 2 is a structural block diagram of a positioning device provided by an embodiment of this application.
FIG. 3 is a schematic structural diagram of an electronic device configured to execute the positioning method provided by an embodiment of this application.

### DETAILED DESCRIPTION

The technical solutions in the embodiments of this application will be clearly and completely described below in conjunction with the drawings in the embodiments of this application.

It should be noted that the terms "system" and "network" in the embodiments of this application may be used interchangeably. "A plurality of" refers to two or more, and in view of this, "a plurality of" in the embodiments of this application may also be understood as "at least two". "and/or" describes the association relationship of associated objects, indicating that three relationships may exist. For example, a and/or b may represent: a exists alone, both a and b exist, or b exists alone. In addition, the character "/" generally indicates an "or" relationship between the preceding and following associated objects unless otherwise specified.

The embodiments of this application provide a positioning method. The method identifies an occlusion category of an occluder at a position of a satellite in a target image, and determines a target satellite for positioning according to the occlusion category, so that the satellites can be classified at a finer granularity based on the occlusion category, facilitating selection of more satellites favorable for positioning, thereby improving the positioning effect of a device.

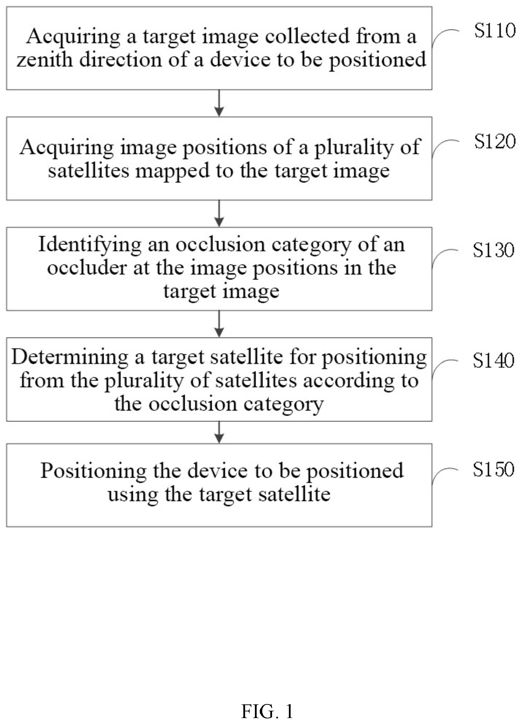

Please refer to FIG. 1, which is a flowchart of a positioning method provided by an embodiment of this application. The method comprises the following steps.

Step S110: acquiring a target image collected from a zenith direction of a device to be positioned.

Wherein the device to be positioned refers to a device that needs to be positioned. The device to be positioned may have a positioning function by itself, and a GNSS receiver is installed in the device to be positioned. The GNSS receiver is used to receive satellite signals, and the satellite signals can be used for subsequent positioning of the device.

In order to identify occluders of satellites, an image capturing device (such as a camera) may be used to collect an image in the zenith direction of the device to be positioned (i.e., a skyward image). The camera may be integrated with the device to be positioned. For example, in a vehicle navigation scenario, the device to be positioned may be understood as a vehicle. In this case, in order to collect an image in the zenith direction, the camera may be installed on the roof of the vehicle. Alternatively, the device to be positioned may be understood as an in-vehicle terminal. In this case, the camera is not integrated with the in-vehicle terminal. Of course, data interaction may be implemented between the camera and the in-vehicle terminal. For example, when positioning is needed, the in-vehicle terminal may send an image collection instruction to the camera. After receiving the image collection instruction, the camera may perform image collection and then transmit the collected image to the in-vehicle terminal. The in-vehicle terminal may perform subsequent positioning processing after receiving the image.

It can be understood that in positioning scenarios of different devices, the positional relationship between the camera and the device to be positioned may be flexibly deployed. In order to ensure that a skyward image with a wider field of view can be captured, the camera may be a wide-angle camera. The installation position may be such that the z-axis of an IMU sensor (inertial measurement unit) in the device to be positioned and the normal direction of the antenna of the device to be positioned are roughly parallel to the optical center of the camera. Of course, it is also acceptable if they are not parallel, and the installation angle may be obtained through calibration. However, in order to ensure the subsequent occluder recognition effect, when installing the camera, it is preferable to ensure they are roughly parallel.

The target image referred to in the embodiments of this application may be understood as a sky image captured by a camera installed in the zenith direction, and the target image may be directly used for occluder recognition subsequently. The zenith direction here does not refer to an absolute zenith direction. Any direction in which the camera faces the sky may be understood as the zenith direction. For example, the camera may be allowed to have a certain tilt angle. The mapping of satellite coordinates in tilted scenarios will be described in detail later, and will not be elaborated here.

Step S120: acquiring image positions of a plurality of satellites mapped to the target image.

The plurality of satellites here refers to satellites corresponding to a plurality of satellite signals received by the device to be positioned. A GNSS receiver is deployed in the device to be positioned, and the GNSS receiver is used to receive satellite signals. At the current position of the device to be positioned, it may receive a plurality of satellite signals. The device to be positioned may obtain spatial coordinates of the satellites based on the received plurality of satellite signals, and then map the spatial coordinates to the target image to obtain pixel coordinates of the satellites in the target image, i.e., the image positions of the satellites in the target image.

Step S130: identifying an occlusion category of an occluder at the image positions in the target image.

The inventors of this application have found in research that different occluders have certain differences in their occlusion capability on GNSS signals. Therefore, in order to improve the positioning effect, when performing positioning, satellites for positioning may be selected according to the occlusion category. Therefore, the occlusion category of the occluder in the image may be identified first.

In some embodiments, the occlusion categories may be classified as no occluder, building, glass roof, tree branch, tree leaf, etc. It can be understood that in practical applications, the occlusion categories may be flexibly classified according to actual conditions, and will not be listed one by one here.

The occlusion category may be identified by using a corresponding image recognition algorithm or a neural network model, for example, by using a convolutional neural network to identify the occlusion category at each image position in the target image. Alternatively, the occlusion category of each occluder in the target image may be identified first, and then the occlusion category at each image position may be obtained, so that the occlusion category at the position of each satellite can be obtained.

Alternatively, edge segmentation, machine learning algorithms, or other methods may also be used to segment objects in the target image, and then the segmented objects may be subjected to occlusion category recognition, and then the occlusion category at each image position may be obtained.

It can be understood that the manner of identifying the occlusion category in the image may refer to the identification manner in related art, and will not be described in detail here.

Step S140: determining a target satellite for positioning from the plurality of satellites according to the occlusion category.

After obtaining the occlusion category at each image position in the target image corresponding to each satellite, satellite filtering may be performed based on the occlusion category. Here, filtering may be performed based on the occlusion capability of different occlusion categories on GNSS signals. For example, if there are 10 satellites in total, corresponding to 10 image positions in the target image, and the occlusion categories at the 10 image positions comprise open area, building, tree leaf, and glass roof, the satellites at the open area may be selected first. If the quantity is insufficient for positioning or the geometric configuration of the satellites is poor, then satellites corresponding to other occlusion categories may be selected. For example, tree leaves have a weak occlusion capability on GNSS signals, while buildings have a strong occlusion capability on GNSS signals. Therefore, satellites corresponding to occlusion categories with weak occlusion capability may be directly selected as satellites for positioning. The selected satellites for positioning may be referred to as target satellites in the embodiments of this application.

Step S150: positioning the device to be positioned using the target satellite.

After the target satellites are filtered out, the device to be positioned may be positioned using the target satellites. For example, the device to be positioned may filter out satellite signals corresponding to the target satellites from the received satellite signals, and then calculate distances between the device to be positioned and each satellite using the received satellite signals of the target satellites. The coordinate positions of the satellites may also be obtained from the received satellite signals. Therefore, the position of the device to be positioned may be calculated based on the coordinate positions of the satellites and the distances.

It can be understood that in different application scenarios, the manner of positioning the device to be positioned using satellites is also different. The above process is merely an example and will not be listed one by one here. For example, during actual positioning, auxiliary means such as an IMU sensor, a wheel speed sensor, and other devices may also be combined to improve the accuracy and reliability of positioning.

It should be noted that the positioning method provided by the embodiments of this application may be applied to various positioning scenarios, such as GNSS positioning (comprising SPP (Single Point Positioning), PPP, RTK, PPP-RTK), GNSS/INS (Inertial Navigation System), GNSS/SINS (Strapdown Inertial Navigation System) (comprising loose coupling, tight coupling, and deep coupling), GNSS/SINS/other combined positioning, or any other scenario where GNSS is used alone or in combination with other sensors for positioning. When positioning is performed in these positioning scenarios, the target satellites for positioning may also be filtered out by the method provided by the embodiments of this application, and then the device to be positioned may be positioned using the target satellites. The manner of positioning the device to be positioned using the target satellites may be different in different positioning scenarios. For details, reference may be made to the implementation manner in related art, and will not be further described here.

In the above implementation process, by identifying the occlusion category of the occluder at the position of the satellite in the target image and determining the target satellites for positioning according to the occlusion category, the satellites can be classified at a finer granularity based on the occlusion category, facilitating selection of more satellites favorable for positioning, thereby improving the positioning effect of the device.

A brief introduction is first provided below on the manner of obtaining the position of each satellite in the target image.

In some embodiments, in a GNSS/SINS positioning scenario, regardless of whether the above-mentioned image capturing device is tilted or parallel to the normal direction of the antenna of the device to be positioned, the image positions of the satellites in the target image may be obtained through the following process: acquiring coordinate positions of a plurality of satellites in an ECEF coordinate system, then converting the coordinate positions of the plurality of satellites in the ECEF coordinate system to coordinate positions in a local horizontal coordinate system (L system) according to an estimated current position of the device to be positioned, and then mapping the coordinate positions of the plurality of satellites in the local horizontal coordinate system to the target image using attitude information of the image capturing device of the device to be positioned and pre-calibrated intrinsic and extrinsic parameters of the image capturing device, to obtain the image positions corresponding to the plurality of satellites in the target image.

Specifically, the coordinate positions of all satellites received by the device to be positioned in the ECEF system ( $\left\{{X}_{i}^{sat , ecef}, { Y}_{i}^{sat , ecef}, { Z}_{i}^{sat , ecef}\right\}$) may be calculated through ephemeris of GNSS satellites, and then the current position of the device to be positioned ({X^{loc, ecef}, Y^{loc, ecef}, Z^{loc, ecef}}) estimated by some means (for example, obtained from an original SPP result, or a position predicted based on information of a previous epoch, or obtained through inertial navigation calculation) may be used to calculate the coordinates {Xᵢ Yᵢ Zᵢ} of the ith satellite in the local horizontal coordinate system (L system). The calculation formula is as follows: $\left[\begin{matrix}{X}_{i} \\ {Y}_{i} \\ {Z}_{i}\end{matrix}\right] = {R}_{ecef}^{L} \left(\left[\begin{matrix}{X}_{i}^{sat , ecef} \\ {Y}_{i}^{sat , ecef} \\ {Z}_{i}^{sat , ecef}\end{matrix}\right]-\left[\begin{matrix}{X}^{loc , ecef} \\ {Y}^{loc , ecef} \\ {Z}^{loc , ecef}\end{matrix}\right]\right) ,$ where ${R}_{ecef}^{L}$ is a transformation matrix from the ECEF system to the L system, which may be directly calculated from the current position according to a fixed method.

Then, the attitude information of the above-mentioned image capturing device (such as a camera) that collects the image may be obtained first. The attitude information may comprise information such as a pitch angle, a roll angle, and a yaw angle of the camera. The attitude information may be calculated through GNSS/SINS, or may be collected through a magnetometer or other sensors. Full attitude information or partial attitude information may be obtained, which is not particularly limited herein. Then, the attitude information may be correspondingly transformed to obtain a rotation matrix ${R}_{L}^{b}$ of the camera equivalent to the local horizontal coordinate system (L system), and then the coordinates of each satellite may be projected to a camera coordinate system (V system) through the rotation matrix ${R}_{L}^{b}$. The calculation formula is as follows:
$\left⌊{Z}_{i}^{0}\right⌋ \left⌊{Z}_{i}\right⌋$, where ${R}_{b}^{v}$ represents extrinsic parameters between the camera and an IMU sensor, which may be obtained through pre-calibration. Here, multiplying the coordinate positions of the satellites in the local horizontal coordinate system by the rotation matrix of the camera is equivalent to compensating for the attitude information of the camera, so that it can adapt to the discrimination of occluded satellites under any attitude. For example, in a scenario where the camera is tilted, through the above processing, the satellite coordinates can be more accurately projected to the camera coordinate system.

Using the above camera coordinates, each satellite may be projected to a pixel plane by the following formula: $\left[\begin{matrix}u \\ v \\ 1\end{matrix}\right] = K \left[\begin{matrix}{X}_{i}^{v} / {Z}_{i}^{v} \\ {Y}_{i}^{v} / {Z}_{i}^{v} \\ 1\end{matrix}\right] ,$ where K represents an intrinsic parameter matrix, which may be obtained through pre-calibration. Meanwhile, an elevation angle (θᵢ) and an azimuth angle (φᵢ) of each satellite may be calculated: ${θ}_{i} = arctan \left({Z}_{i}^{v}/\sqrt{{\left({X}_{i}^{v}\right)}^{2} + {\left({Y}_{i}^{v}\right)}^{2}}\right)$ ${φ}_{i} = arctan 2 \left({X}_{i}^{v}, { Y}_{i}^{v}\right) .$

It should be noted that originally, the elevation angle and the azimuth angle of each satellite here may be calculated from the coordinates of the satellite in the local horizontal coordinate system. Here, they are calculated from the coordinates of the satellite in the camera coordinate system because when the camera coordinates of the satellite are obtained above, the attitude information of the camera is multiplied to correct the attitude information of the camera, while what is actually needed is the elevation angle and the azimuth angle in the camera coordinate system.

Through the above method, each satellite may be projected to the target image, so that the pixel coordinates of each satellite in the target image may be obtained.

On the basis of the above embodiments, in the implementation manner of filtering target satellites, in addition to the above manner of directly filtering according to the occlusion category, the occlusion level of the satellite at the corresponding image position may also be determined according to the occlusion category, where different occlusion categories correspond to different occlusion levels, and then the target satellite for positioning may be determined from the plurality of satellites according to the occlusion level.

For example, in the above example, the occlusion categories are classified as no occlusion, building, glass roof, tree branch, and tree leaf. Then, the occlusion levels may be classified from no occlusion (level 0) to full occlusion (level N, such as level 4). For example, no occlusion corresponds to occlusion level 0, tree leaf corresponds to occlusion level 1, tree branch corresponds to occlusion level 2, glass roof corresponds to occlusion level 3, and building corresponds to occlusion level 4. In this way, the occlusion level corresponding to each satellite in the target image may be obtained.

In addition, it should be noted that since the installation position of the camera may not necessarily be strictly installed as required, for the satellites corresponding to the satellite signals received by the device to be positioned, after being mapped to the target image, some satellites may not be in the target image but outside the image. For example, the device to be positioned receives satellite signals of 8 satellites, and after coordinate mapping in the above embodiment, only pixel coordinates of 6 satellites are in the target image. Then the remaining 2 satellites are not within the field of view of the camera. For the occlusion levels of these 2 satellites, their occlusion levels may be directly determined as level N, i.e., the full occlusion level.

In the above implementation process, by obtaining the occlusion level corresponding to each satellite and then filtering the target satellites through the occlusion levels, the satellites may be classified at a finer granularity according to the occlusion condition, so as to filter out satellites more favorable for positioning.

In the above implementation process, the manner of filtering the target satellites according to the occlusion levels comprises the following types:
(1) counting the number of satellites corresponding to each occlusion level, and then determining the target satellite for positioning from the plurality of satellites based on the number of satellites.

Under this implementation manner, a set number of satellites may be selected as the target satellites for positioning. Here, when selecting the set number of target satellites, the selection may be performed in the order of occlusion levels. The specific implementation manner comprises: sequentially selecting satellites in the order of occlusion levels from level 0 to level N until the number of selected satellites reaches a set threshold, where level 0 to level N are classified from no occlusion level to full occlusion level, level 0 is the no occlusion level, level N is the full occlusion level, and the value of N may be flexibly set according to actual conditions. For example, in the above embodiment, the highest occlusion level is 4, so the value of N is 4. Then, the selected satellites may be determined as the target satellites for positioning.

For example, suppose there are 8 satellites in the target image. After obtaining the occlusion level corresponding to each satellite as described above, the number of satellites corresponding to each occlusion level may be counted. For example, the number of level 0 satellites is 2, the number of level 1 satellites is 3, the number of level 2 satellites is 1, and the number of level 3 satellites is 2. If the set threshold is set to 4 (the setting of this threshold may be flexibly set according to actual conditions), then selection is performed in the order from level 0 to level N. First, 2 level 0 satellites are selected, and then 2 level 1 satellites are selected (there are 3 level 1 satellites, any 2 of them may be selected, or 2 satellites closer to the center of the image may be selected, which may help improve positioning accuracy). In this way, the 4 selected satellites may be used as the satellites for positioning. Since the occlusion levels of the selected satellites are not high, the impact on the strength of satellite signals is not significant, so they are more favorable for positioning the device to be positioned.

In the above implementation process, by selecting the set number of satellites with small occlusion levels, it may be ensured that the selected satellites have a low probability of being occluded and strong satellite signals, which helps improve the positioning effect. Meanwhile, the number of selected satellites reaching the set threshold ensures that the number of selected satellites is sufficient for positioning.
(2) sequentially selecting satellites of i occlusion levels in the order of occlusion levels from level 0 to level N, where level 0 to level N are classified from no occlusion level to full occlusion level, level 0 is the no occlusion level, level N is the full occlusion level, and i is an integer greater than or equal to 1 and less than or equal to N. Then, the satellites of the i occlusion levels are determined as the target satellites for positioning.

In the above manner (1), selection is directly based on the set threshold. In this manner (2), selection may be based on the number of occlusion levels. Continuing with the above example, if satellites of i levels are sequentially selected, in the above example, there are 4 satellite levels, and the value of i may be flexibly set according to actual needs. For example, if the value of i is 2, then satellites of 2 levels may be selected, i.e., level 0 satellites (2) and level 1 satellites (3), a total of 5 satellites, and then these 5 satellites may be used as the target satellites for positioning.

In the above implementation process, by selecting some satellites with small occlusion levels, it may be ensured that the selected satellites have a low probability of being occluded and strong satellite signals, which helps improve the positioning effect.

On the basis of the above embodiments, in the implementation manner of the above manner (1), in order to ensure that the selected satellites can meet a certain positioning accuracy, when determining the target satellites, the DOP (Dilution Of Precision) value may also be considered. Therefore, the target satellites for positioning may also be determined from the plurality of satellites based on the number of satellites and the DOP value of the satellites corresponding to the occlusion level.

Wherein, the DOP value may be configured to represent a magnification factor of errors. In the field of navigation, the DOP value may be configured to measure the accuracy of positioning results of a receiver. A small DOP value means smaller errors and higher positioning accuracy. Therefore, the DOP value may be combined to select target satellites more favorable for positioning accuracy.

In the above implementation process, by determining the satellites for positioning based on the number of satellites and the DOP value, the situation where positioning cannot be performed due to an insufficient number of satellites may be avoided, and the positioning accuracy of the target satellites may be ensured based on the DOP value. That is, in this solution, the occlusion degree of the satellites is classified by combining the number of satellites and the DOP value, so that when the number of satellites is insufficient, while ensuring the accuracy of occlusion and non-occlusion discrimination, the currently received satellite information may be maximally utilized, avoiding the situation where the available number of satellites is insufficient due to binary occlusion judgment (i.e., only judging the two cases of occlusion and non-occlusion), which may affect the accuracy of positioning results or even cause positioning failure.

The implementation manners of selecting the target satellites by combining the DOP value comprise the following implementation manners:
1)Sequentially selecting satellites in the order of occlusion levels from level 0 to level N until the number of selected satellites reaches a set threshold, where level 0 to level N are classified from no occlusion level to full occlusion level, level 0 is the no occlusion level, and level N is the full occlusion level. Then, the DOP value of the selected satellites may be calculated. If the DOP value is less than a set threshold, the selected satellites are determined as the target satellites for positioning.

Continuing with the above example, under this implementation manner, for example, 2 level 0 satellites may be selected first, and then 2 level 1 satellites may be selected. If the set threshold is 4, then the DOP value of the 4 selected satellites may be calculated.

Wherein, the formula for calculating the DOP value is as follows: $G = \left[\begin{matrix}- cos {θ}^{\left(1\right)} sin {φ}^{\left(1\right)} & - cos {θ}^{\left(1\right)} cos {φ}^{\left(1\right)} & - sin {θ}^{\left(1\right)} & 1 \\ - cos {θ}^{\left(2\right)} sin {φ}^{\left(2\right)} & - cos {θ}^{\left(2\right)} cos {φ}^{\left(2\right)} & - sin {θ}^{\left(2\right)} & 1 \\ ⋯ & ⋯ & ⋯ & ⋯ \\ - cos {θ}^{\left(N\right)} sin {φ}^{\left(N\right)} & - cos {θ}^{\left(N\right)} cos {φ}^{\left(N\right)} & - sin {θ}^{\left(N\right)} & 1\end{matrix}\right] ;$ $H = {\left({G}^{T}G\right)}^{- 1} ;$ $DOP = \sqrt{{h}_{11} + {h}_{22} + {h}_{33} + {h}_{44}} ;$ in the above formula, θ⁽ⁱ⁾ and φ^{(¡)} in the G matrix represent the elevation angle and the azimuth angle of the ith satellite respectively (these values may be obtained through the above process of obtaining pixel coordinates of the satellites in the image), N represents the number of satellites, which is 4 here, and hⱼⱼ represents the element at the jth row and jth column of the H matrix.

In this way, the DOP value of the 4 selected satellites may be calculated. If this DOP value is less than the set threshold, it may be considered that the positioning accuracy of these 4 satellites meets the requirements, and these 4 satellites may be used as the target satellites for positioning. It can be understood that the specific value of the set threshold here may be flexibly set according to actual conditions.

It should be noted that if the calculated DOP value is greater than or equal to the set threshold, satellite selection may continue in the order of occlusion levels until the DOP value of the selected satellites is less than the set threshold. For example, another level 1 satellite may continue to be selected. At this point, 5 satellites are selected, and then the DOP value of these 5 satellites is calculated. If the DOP value is less than the set threshold, these 5 satellites are used as the satellites for positioning. Otherwise, level 2 satellites may continue to be selected. Under this manner, there is no need to meet the satellite number threshold, and the number of selected satellites may be greater than the set threshold. Under this implementation manner, it may be ensured that the number of selected satellites meets the minimum number requirement, so that positioning of the device to be positioned may be performed, effectively avoiding the situation where positioning cannot be performed due to an insufficient number of satellites, while also meeting the requirements for positioning accuracy.

In the above implementation process, the selected target satellites reaching the set threshold ensures the minimum number of satellites for positioning, and the DOP value of the target satellites being less than the set threshold ensures the positioning accuracy.

2)Sequentially selecting satellites of each occlusion level in the order of occlusion levels from level 0 to level N until the number of satellites corresponding to the i selected occlusion levels is greater than or equal to a set threshold, where i is an integer greater than or equal to 1 and less than or equal to N. Then, the DOP value of the satellites of the i occlusion levels is calculated. If the DOP value is less than the set threshold, the satellites of the i occlusion levels are determined as the target satellites for positioning.

The classification of occlusion levels here is also the same as in the above embodiments, i.e., level 0 is the no occlusion level and level N is the full occlusion level.

First, the number N0 of level 0 satellites may be counted. If N0 is greater than or equal to the set threshold, the DOP value D0 of all level 0 satellites may be calculated. If the DOP value is less than the set threshold, at this point the value of i is 1, and the level 0 satellites are used as the satellites for positioning, while other satellites are not available. Then, during internal positioning, the occlusion levels of other satellites may all be set to level N, indicating that other satellites are not used for positioning.

If N0 is less than the set threshold or D0 is greater than or equal to the set threshold, then the number N1 of level 1 satellites is further counted. If N0+N1 is greater than or equal to the set threshold, the DOP value D1 of the satellite set composed of all level 0 and level 1 satellites is calculated. If D1 is less than the set threshold, at this point the value of i is 2, and the level 0 and level 1 satellites are used as the satellites for positioning, while other satellites are not available. Then, during internal positioning, the occlusion levels of other satellites may all be set to level N, indicating that other satellites are not used for positioning.

If N0+N1 is less than the set threshold or D1 is greater than or equal to the set threshold, the number N2 of level 2 satellites is further counted. If N0+N1+N2 is greater than or equal to the set threshold, the DOP value D2 of the satellite set composed of all level 0, level 1, and level 2 satellites is calculated. If D2 is less than the set threshold, at this point the value of i is 3, and the level 0, level 1, and level 2 satellites are used as the satellites for positioning, and the levels of other satellites are set to level N.

If N0+N1+N2 or D2 still does not meet the above conditions, the above process may continue to be performed for statistics and calculation until level N-1 is reached. If the conditions are still not met after reaching level N-1, then level N may no longer be counted at this point, because level N is fully occluded and may not be very useful for actual positioning. Therefore, the original occlusion levels of the satellites may be maintained, and then the satellites for positioning may be selected according to the above manner (1) and manner (2) by selecting a set number of satellites or satellites of a set number of levels.

In the above implementation process, by selecting satellites of i occlusion levels with small occlusion levels, the selected satellites are satellites with good signal quality, and the DOP value of the satellites participating in positioning is also small, thereby greatly improving the positioning accuracy.

On the basis of the above embodiments, if the number of target satellites filtered according to the above conditions is insufficient for positioning, satellites with larger occlusion levels may continue to be selected. When performing positioning, different weights may be set for satellites of different occlusion levels. For example, more weights may be set for satellites with smaller occlusion levels, and larger weights may be set for satellites with larger occlusion levels. Specifically, weights may be set in links such as data preprocessing, quality control, SPP, float solution calculation, fixed solution calculation, and fixed solution verification during the positioning process, so as to reduce the impact of satellites with large occlusion levels on positioning. In this way, while ensuring that positioning can be performed, the positioning effect may also be improved to a certain extent.

On the basis of the above embodiments, the target image obtained above may be a two-dimensional image, i.e., an image collected by a camera. In other embodiments, the target image may also be a three-dimensional laser point cloud. In this way, the positioning method may be applied to both two-dimensional image acquisition scenarios and three-dimensional image acquisition scenarios.

It can be understood that when the target image is a three-dimensional laser point cloud, the above-mentioned image capturing device may be a radar device, which may be used for collection. For example, in a vehicle navigation scenario, a radar device may be installed on the roof of the vehicle, and when positioning is needed, the radar device may be used to scan and obtain a laser point cloud. At this point, the laser point cloud is a three-dimensional image, and there is no need to map the three-dimensional coordinates of the satellites to the image. The coordinates {Xᵢ Yᵢ Zᵢ} of the satellites in the local horizontal coordinate system (L system) obtained above may be used as the pixel coordinates of the satellites in the laser point cloud.

On the basis of the above embodiments, when collecting the target image, in order to obtain an image with a wider field of view, images may be collected by multiple cameras. For example, a plurality of images collected from the zenith direction of the device to be positioned by a plurality of cameras may be obtained, and then panoramic image stitching may be performed on the plurality of images to obtain the target image.

Under this implementation manner, a plurality of cameras at different positions are installed, but all these cameras are configured to capture images in the zenith direction of the device to be positioned, with only slight differences in the shooting angles of the respective cameras. In this way, an image with a wider field of view may be obtained through shooting by multiple cameras, so as to avoid the situation where some satellites may exceed the image field of view when mapping the satellites to the image coordinates.

The manner of performing panoramic image stitching on the plurality of images may refer to the implementation manner in related art, and will not be elaborated here.

In other embodiments, a plurality of images may also be collected by multiple cameras, and then the target satellites may be filtered for each image according to the above embodiments. For example, if there are 3 images, the target satellite filtering needs to be performed three times. The three filtering processes are the same, and 3 filtering results may be obtained. Then, the 3 filtering results may be combined, i.e., deduplication processing may be performed on the 3 filtering results to obtain the finally filtered target satellites, which may be used for subsequent positioning processing.

In the above implementation process, by performing panoramic stitching on the plurality of collected images, an image with a wider field of view may be obtained, which helps subsequently map the coordinates of all satellites to the image to reduce the situation where satellite coordinates fall outside the image.

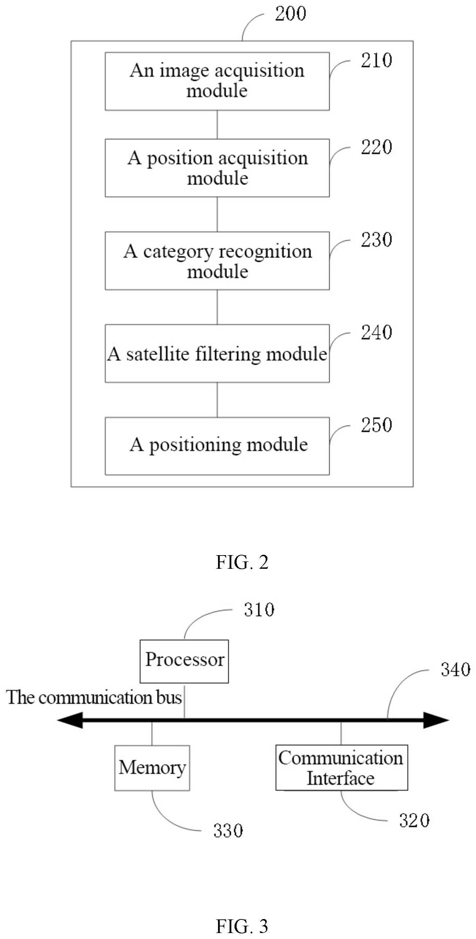

Please refer to FIG. 2, which is a structural block diagram of a positioning device 200 provided by an embodiment of this application. The device 200 may be a module, a program segment, or code on an electronic device. It should be understood that the device 200 corresponds to the method embodiment of FIG. 1 above, and is capable of executing each step involved in the method embodiment of FIG. 1. For specific functions of the device 200, reference may be made to the above description, and detailed description is appropriately omitted here to avoid repetition.

Optionally, the device 200 comprises:
an image acquisition module 210, configured to acquire a target image collected from a zenith direction of a device to be positioned;
a position acquisition module 220, configured to acquire image positions of a plurality of satellites mapped to the target image, wherein the plurality of satellites are satellites corresponding to a plurality of satellite signals received by the device to be positioned;
a category recognition module 230, configured to identify an occlusion category of an occluder at the image positions in the target image;
a satellite filtering module 240, configured to determine a target satellite for positioning from the plurality of satellites according to the occlusion category; and
a positioning module 250, configured to position the device to be positioned using the target satellite.

Optionally, the satellite filtering module 240 is specifically configured to determine an occlusion level of a satellite at a corresponding image position according to the occlusion category, wherein different occlusion categories correspond to different occlusion levels, and determine the target satellite for positioning from the plurality of satellites according to the occlusion level.

Optionally, the satellite filtering module 240 is specifically configured to count the number of satellites corresponding to each occlusion level, and determine the target satellite for positioning from the plurality of satellites based on the number of satellites.

Optionally, the satellite filtering module 240 is specifically configured to determine the target satellite for positioning from the plurality of satellites based on the number of satellites and a DOP value of satellites corresponding to the occlusion level.

Optionally, the satellite filtering module 240 is specifically configured to sequentially select satellites in the order of occlusion levels from level 0 to level N until the number of selected satellites reaches a set threshold, wherein level 0 to level N are classified from no occlusion level to full occlusion level, level 0 is the no occlusion level, and level N is the full occlusion level, calculate a DOP value of the selected satellites, and determine the selected satellites as the target satellite for positioning if the DOP value is less than a set threshold.

Optionally, the satellite filtering module 240 is specifically configured to sequentially select satellites of each occlusion level in the order of occlusion levels from level 0 to level N until the number of satellites corresponding to i selected occlusion levels is greater than or equal to a set threshold, wherein level 0 to level N are classified from no occlusion level to full occlusion level, level 0 is the no occlusion level, level N is the full occlusion level, and i is an integer greater than or equal to 1 and less than or equal to N, calculate a DOP value of the satellites of the i selected occlusion levels, and determine the satellites of the i selected occlusion levels as the target satellites for positioning if the DOP value is less than a set threshold.

Optionally, the satellite filtering module 240 is specifically configured to sequentially select satellites in the order of occlusion levels from level 0 to level N until the number of selected satellites reaches a set threshold, wherein level 0 to level N are classified from no occlusion level to full occlusion level, level 0 is the no occlusion level, and level N is the full occlusion level, and determine the selected satellites as the target satellites for positioning.

Optionally, the satellite filtering module 240 is specifically configured to sequentially select satellites of i occlusion levels in the order of occlusion levels from level 0 to level N, wherein level 0 to level N are classified from no occlusion level to full occlusion level, level 0 is the no occlusion level, level N is the full occlusion level, and i is an integer greater than or equal to 1 and less than or equal to N, and determine the satellites of the i occlusion levels as the target satellites for positioning.

Optionally, the position acquisition module 220 is configured to acquire coordinate positions of the plurality of satellites in an ECEF coordinate system, convert the coordinate positions of the plurality of satellites in the ECEF coordinate system to coordinate positions in a local horizontal coordinate system according to an estimated current position of the device to be positioned, and map the coordinate positions of the plurality of satellites in the local horizontal coordinate system to the target image using attitude information of an image capturing device of the device to be positioned and intrinsic and extrinsic parameters of the image capturing device, to obtain the image positions corresponding to the plurality of satellites in the target image.

Optionally, the target image is a two-dimensional image or the target image is a three-dimensional laser point cloud.

Optionally, the image acquisition module 210 is specifically configured to acquire a plurality of images collected from the zenith direction of the device to be positioned by a plurality of cameras, and perform panoramic image stitching on the plurality of images to obtain the target image.

It should be noted that those skilled in the art may clearly understand that for the convenience and brevity of description, the specific working process of the above-described device may refer to the corresponding process in the foregoing method embodiments, and will not be repeated here.

Please refer to FIG. 3, which is a schematic structural diagram of an electronic device configured to execute the positioning method provided by an embodiment of this application. The electronic device may comprise: at least one processor 310, for example a CPU, at least one communication interface 320, at least one memory 330, and at least one communication bus 340. Wherein, the communication bus 340 is configured to implement connection communication between these components. Wherein, the communication interface 320 of the device in the embodiments of this application is configured to perform signaling or data communication with other node devices. The memory 330 may be a high-speed RAM memory, or may be a non-volatile memory, for example at least one disk memory. The memory 330 may optionally also be at least one storage device located remotely from the aforementioned processor. The memory 330 stores computer-readable instructions, and when the computer-readable instructions are executed by the processor 310, the electronic device executes the method process shown in FIG. 1 above.

It can be understood that the structure shown in FIG. 3 is merely schematic. The electronic device may also comprise more or fewer components than those shown in FIG. 3, or may have a configuration different from that shown in FIG. 3. The components shown in FIG. 3 may be implemented by hardware, software, or a combination thereof.

The embodiments of this application provide a computer-readable storage medium storing a computer program. When the computer program is executed by a processor, the method process executed by the electronic device in the method embodiment shown in FIG. 1 is performed.

This embodiment discloses a computer program product. The computer program product comprises a computer program stored on a non-transitory computer-readable storage medium. The computer program comprises program instructions, and when the program instructions are executed by a computer, the computer is capable of executing the method provided by the above method embodiments. For example, the method comprises:
acquiring a target image collected from a zenith direction of a device to be positioned;
acquiring image positions of a plurality of satellites mapped to the target image, wherein the plurality of satellites are satellites corresponding to a plurality of satellite signals received by the device to be positioned;
identifying an occlusion category of an occluder at the image positions in the target image;
determining a target satellite for positioning from the plurality of satellites according to the occlusion category; and
positioning the device to be positioned using the target satellite.

In summary, the embodiments of this application provide a positioning method, device, electronic device, and storage medium. The method identifies an occlusion category of an occluder at a position of a satellite in a target image, and determines a target satellite for positioning according to the occlusion category, so that the satellites can be classified at a finer granularity based on the occlusion category, facilitating selection of more satellites favorable for positioning, thereby improving the positioning effect of a device.

In the embodiments provided by this application, it should be understood that the disclosed device and method may be implemented in other ways. The above-described device embodiments are merely illustrative. For example, the division of the units is merely a logical function division. In actual implementation, there may be other division manners. For another example, multiple units or components may be combined or may be integrated into another system, or some features may be omitted or not executed. In addition, the shown or discussed mutual coupling or direct coupling or communication connection may be indirect coupling or communication connection through some communication interfaces, devices, or units, and may be in electrical, mechanical, or other forms.

In addition, the units described as separate components may or may not be physically separated. The components shown as units may or may not be physical units, i.e., may be located in one place, or may be distributed to multiple network units. Some or all of the units may be selected according to actual needs to achieve the purpose of the solution of this embodiment.

Furthermore, the functional modules in the various embodiments of this application may be integrated together to form an independent part, or each module may exist separately, or two or more modules may be integrated to form an independent part.

In this document, relational terms such as first and second are used merely to distinguish one entity or operation from another entity or operation, and do not necessarily require or imply that any actual relationship or order exists between these entities or operations.

The above are merely embodiments of this application, and are not configured to limit the protection scope of this application. For those skilled in the art, this application may have various changes and modifications. Any modifications, equivalent replacements, improvements, etc. made within the spirit and principles of this application shall be comprised in the protection scope of this application.

### Industrial applicability

By adopting the above solution, by identifying the occlusion category of the occluder at the position of the satellite in the target image and determining the target satellites for positioning according to the occlusion category, the satellites can be classified at a finer granularity based on the occlusion category, facilitating selection of more satellites favorable for positioning, thereby improving the positioning effect of a device.

## Claims

1. A positioning method, comprising:
acquiring a target image collected from a zenith direction of a device to be positioned;
acquiring image positions of a plurality of satellites mapped to the target image wherein the plurality of satellites are satellites corresponding to a plurality of satellite signals received by the device to be positioned;
identifying an occlusion category of an occluder at the image positions in the target image;
determining a target satellite for positioning from the plurality of satellites according to the occlusion category; and
utilizing the target satellite to position the device to be positioned.

2. The method according to claim 1, wherein the determining a target satellite for positioning from the plurality of satellites according to the occlusion category comprises:
determining an occlusion level of a satellite at a corresponding image position according to the occlusion category wherein different occlusion categories correspond to different occlusion levels;
and determining the target satellite for positioning from the plurality of satellites according to the occlusion level.

3. The method according to claim 2, wherein the determining a target satellite for positioning from the plurality of satellites according to the occlusion level comprises:
counting the number of satellites corresponding to each occlusion level;
and determining the target satellite for positioning from the plurality of satellites based on the number of satellites.

4. The method according to claim 3, wherein the determining a target satellite for positioning from the plurality of satellites based on the number of satellites comprises:
determining the target satellite for positioning from the plurality of satellites based on the number of satellites and a DOP value of satellites corresponding to the occlusion level.

5. The method according to claim 4, wherein the determining a target satellite for positioning from the plurality of satellites based on the number of satellites and a DOP value of satellites corresponding to the occlusion level comprises:
sequentially selecting satellites in an order of occlusion levels from a level 0 to a level N until the number of selected satellites reaches a set threshold wherein the level 0 to the level N are divided from a no-occlusion level to a full-occlusion level with the level 0 being the no-occlusion level and the level N being the full-occlusion level;
calculating a DOP value of the selected satellites; and
determining the selected satellites as the target satellite for positioning if the DOP value is less than a set threshold.

6. The method according to claim 4, wherein the determining a target satellite for positioning from the plurality of satellites based on the number of satellites and a DOP value of satellites corresponding to the occlusion level comprises:
sequentially selecting satellites corresponding to each occlusion level in an order of occlusion levels from a level 0 to a level N until the number of satellites corresponding to i selected occlusion levels is greater than or equal to a set threshold wherein the level 0 to the level N are divided from a no-occlusion level to a full-occlusion level with the level 0 being the no-occlusion level and the level N being the full-occlusion level and i is an integer greater than or equal to 1 and less than or equal to N;
calculating a DOP value of satellites corresponding to the i selected occlusion levels;
and determining satellites corresponding to the i selected occlusion levels as the target satellites for positioning if the DOP value is less than a set threshold.

7. The method according to claim 3, wherein the determining a target satellite for positioning from the plurality of satellites based on the number of satellites comprises:
sequentially selecting satellites in an order of occlusion levels from a level 0 to a level N until the number of selected satellites reaches a set threshold wherein the level 0 to the level N are divided from a no-occlusion level to a full-occlusion level with the level 0 being the no-occlusion level and the level N being the full-occlusion level;
and determining the selected satellites as the target satellite for positioning.

8. The method according to claim 2, wherein the determining target satellites for positioning from the plurality of satellites according to the occlusion level comprises:
sequentially selecting satellites of i occlusion levels in an order of occlusion levels from a level 0 to a level N wherein the level 0 to the level N are divided from a no-occlusion level to a full-occlusion level with the level 0 being the no-occlusion level and the level N being the full-occlusion level and i is an integer greater than or equal to 1 and less than or equal to N;
and determining the satellites of the i occlusion levels as the target satellites for positioning.

9. The method according to any one of claims 1-8, wherein the acquiring image positions of a plurality of satellites mapped to the target image comprises:
acquiring coordinate positions of the plurality of satellites in an Earth-Centered, Earth-Fixed coordinate system;
converting the coordinate positions of the plurality of satellites in the Earth-Centered, Earth-Fixed coordinate system to coordinate positions in a local horizontal coordinate system according to an estimated current position of the device to be positioned;
and mapping the coordinate positions of the plurality of satellites in the local horizontal coordinate system to the target image using attitude information of an image capturing device of the device to be positioned and intrinsic and extrinsic parameters of the image capturing device to obtain the image positions corresponding to the plurality of satellites in the target image.

10. The method according to any one of claims 1-9, wherein the target image is a two-dimensional image or the target image is a three-dimensional laser point cloud.

11. The method according to any one of claims 1-10, wherein the acquiring a target image collected from a zenith direction of a device to be positioned comprises:
acquiring a plurality of images collected from the zenith direction of the device to be positioned by a plurality of cameras;
and performing panoramic image stitching on the plurality of images to obtain the target image.

12. A positioning device, comprising:
an image acquisition module configured to acquire a target image collected from a zenith direction of a device to be positioned;
a position acquisition module configured to acquire image positions of a plurality of satellites mapped to the target image wherein the plurality of satellites are satellites corresponding to a plurality of satellite signals received by the device to be positioned;
a category recognition module configured to identify an occlusion category of an occluder at the image positions in the target image;
a satellite filtering module configured to determine target satellites for positioning from the plurality of satellites according to the occlusion category; and
a positioning module configured to position the device to be positioned using the target satellites.

13. An electronic device, wherein, the device comprises a processor and a memory, the memory storing computer-readable instructions, and when the computer-readable instructions are executed by the processor, the method according to any one of claims 1-11 is performed.

14. A computer-readable storage medium storing a computer program, wherein, when the computer program is executed by a processor, the method according to any one of claims 1-11 is performed.
